Europäisches Patentamt

European Patent Office

Office européen des brevets

(11) Numéro de publication : **0 293 440 B1**

## (12) FASCICULE DE BREVET EUROPEEN

(45) Date de publication du fascicule du brevet :
01.04.92 Bulletin 92/14

(51) Int. Cl.⁵ : **G01N 21/13**

(21) Numéro de dépôt : **88900233.3**

(22) Date de dépôt : **09.12.87**

(86) Numéro de dépôt international :
**PCT/FR87/00490**

(87) Numéro de publication internationale :
**WO 88/04420 16.06.88 Gazette 88/13**

(54) PROCEDE DE MESURE DE RAYONNEMENT LUMINEUX.

(30) Priorité : **11.12.86 FR 8617353**

(43) Date de publication de la demande :
**07.12.88 Bulletin 88/49**

(45) Mention de la délivrance du brevet :
**01.04.92 Bulletin 92/14**

(84) Etats contractants désignés :
**AT BE CH DE GB IT LI LU NL SE**

(56) Documents cités :
**DE-A- 2 435 317**
**DE-A-35 318 91**

(56) Documents cités :
**US-A-44 431 04**
**US-A-46 266 84**
**Patents Abstracts of Japan, vol. 9, no. 127**
**(P-360)(1850) 31 May 1985 & JP A 6011144**

(73) Titulaire : **CIS BIO INTERNATIONAL**
**RN 306**
**F-91000 Saclay (FR)**

(72) Inventeur : **MARCHAND, Joseph**
**15, clos Verrières**
**F-91390 Verrières-le-Buisson (FR)**

(74) Mandataire : **Mongrédien, André et al**
**c/o BREVATOME 25, rue de Ponthieu**
**F-75008 Paris (FR)**

Jouve, 18, rue Saint-Denis, 75001 PARIS

## Description

La présente invention a pour objet un procédé de mesure de rayonnement lumineux issu de corps émissifs, utilisable notamment en fluorescence, en phosphorescence, ou encore en néphélométrie. D'après ces méthodes, utilisées notamment en biologie, un rayonnement incident atteint le corps dont il faut mesurer la concentration ; un rayonnement est alors émis, dont l'intensité caractérise la concentration du corps à doser et dont la longueur d'onde est semblable ou différente de celle du rayonnement incident selon le cas.

Dans la pratique, on peut être amené à effectuer des dosages simultanés ou successifs. Dans ce cas, on emploie des ensembles de cuves de mesure.

Le brevet européen EP-A-0 025 350 décrit ainsi une plaque munie de plusieurs dizaines de petits puits disposés en réseau quadrilatéral et en forme de coquetiers. D'après ce brevet, une rangée de pipettes permet de déposer une goutte de réactif dans chacun des puits d'une même rangée, et une rangée de détecteurs de luminescence située vis-à-vis des pipettes et sous le fond des puits permet de mesurer le rayonnement émis. Le matériau de la plaque et des puits est évidemment transparent au rayonnement émis. Un casier disposé sous la plaque permet d'isoler les différents puits en évitant que des rayonnements impressionnent des détecteurs placés sous les puits voisins.

On déplace ensuite l'ensemble constitué des pipettes et des détecteurs à la rangée suivante.

Ce dispositif n'est pas adapté à une méthode comprenant une excitation par rayonnement et non par produit chimique, car le rayonnement incident remplaçant chaque pipette serait obligatoirement vertical descendant et capté par les détecteurs : il serait impossible de le distinguer du rayonnement émis en réponse pour peu que celui-ci ait la même longueur d'onde ou une longueur d'onde voisine, ou que le rayonnement émis soit de faible intensité.

C'est pourquoi il peut être nécessaire de travailler avec des cuves disposées en barrettes. Il est alors possible d'exciter selon une certaine incidence transversale et de mesurer les caractéristiques du rayonnement émis selon une incidence transversale différente, de préférence perpendiculaire. Des exemples de construction de telles barrettes de cuves sont déjà connus en soi mais ne sont pas forcément prévus pour des dosages par luminescence : certaines d'entre elles présentent des cuves contiguës, ce qui fait qu'on ne peut éviter des rayonnements parasites entre cuves voisines, comme on l'a évoqué à propos du brevet européen cité ci-dessus, alors que les cuves d'autres barrettes sont de formes plus compliquées, notamment tronconiques ou à fond hémisphérique et nécessitent, pour leur positionnement, des supports appropriés difficilement utilisables pour une automatisation totale. Un tel exemple peut être trouvé dans le brevet européen EP-A-0 114 056.

Le brevet US-A-4 443 104 décrit quant à lui un procédé de mesure de rayonnement lumineux et notamment photoluminescent issu d'un produit placé dans des cuves transparentes alignées régulièrement en barrettes, séparées par des intervalles et liées entre elles par des entretoises ; il consiste, après avoir rempli les cuves du produit, à déplacer au moyen d'un dispositif mécanique la barrette longitudinalement sur un chemin de glissement de manière à présenter successivement chacune des cuves devant un rayonnement incident et un capteur mesurant le rayonnement issu.

Le dispositif mécanique conforme à l'invention consiste en un écran qui vient s'enfoncer dans un intervalle.

Selon une autre réalisation, on utilise deux écrans opaques qui sont enfoncés au cours du déplacement de l'appareil et de la mesure du rayonnement émis dans deux intervalles voisins situés de part et d'autre de la cuve où l'on effectue la mesure.

Selon un mode de réalisation, les cuves sont à section rectangulaire et à fond plat. Le rayonnenent excitateur est alors perpendiculaire aux faces latérales et le rayonnement émis mesuré est perpendiculaire au fond. Cette disposition permet de focaliser et d'effectuer la collimation des rayonnements d'excitation et d'émission.

Les faces des cuves par lesquelles passent les rayonnements incidents et issus du produit sont, selon une disposition importante de l'invention, en renfoncement à l'intérieur de leur contour.

Les figures annexées dont l'énumération suit vont permettre de décrire plus complètement le procédé d'après un exemple non limitatif de mesure de fluorescence :

– la figure 1 représente essentiellement, en perspective, une barrette de cuves utilisable selon l'invention,

– la figure 2 représente une vue générale de dessus des agents principalement mécaniques qui permettent, dans une réalisation possible de l'invention, de mettre en oeuvre le procédé objet de l'invention en liaison avec les barrettes de la figure 1,

– la figure 3 représente une coupe du dispositif d'incubation et de mise en position des barrettes selon la ligne III-III de la figure 2,

– la figure 4 représente une vue de dessus du mécanisme d'avance des barrettes en vue de mesures successives,

– la figure 5 représente un détail de ce mécanisme suivant la coupe V-V de la figure 4,

– la figure 6 représente, en coupe prises suivant la ligne VI-VI de la figure 2, le dispositif optique permettant de réaliser les mesures.

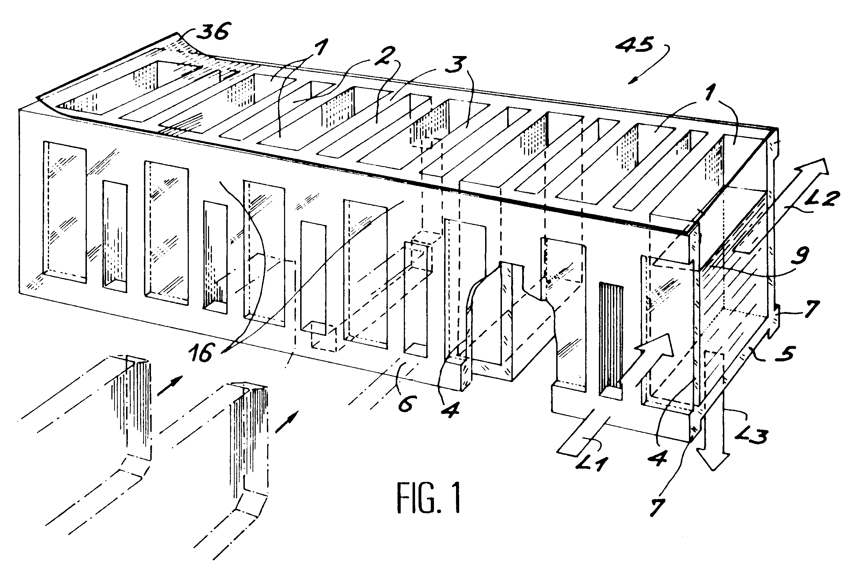

D'après la figure 1, une barrette de cuves utilisable pour l'invention consiste en un alignement de cuves 1 séparées par des intervalles 2. Les cuves 1 sont à section rectangulaire et comprennent des côtés longitudinaux 4 et des côtés transversaux 3, ainsi qu'un fond plat 5. Elles sont reliées entre elles par des entretoises inférieures 6 et supérieures 16. Elles sont de dimensions uniformes. Comme les intervalles 2 sont aussi égaux entre eux, la barrette a donc une structure parfaitement répétitive.

Selon un mode particulier, les côtés longitudinaux 4 ainsi que le fond 5 présentent pour chaque cuve un renfoncement à l'intérieur de leur contour afin tout d'abord de diminuer leur épaisseur et de rendre les barrettes plus transparentes, mais surtout afin de protéger ces faces contre les rayures accidentelles nuisibles à l'illumination du produit 9 à doser contenu dans les cuves 1 et à la mesure de la lumière qu'il émet en réponse, comme on le décrira plus en détail plus loin. Avantageusement, les entretoises supérieures 16 affleurent au niveau du bord des cuves 1, ce qui facilite le scellement de l'ouverture supérieure des diverses cuves 1 par tout moyen, par exemple du papier adhésif 36.

Selon encore une autre réalisation, les entretoises inférieures 6 prolongent les parties des cuves 1 situées à l'intersection du fond 5 et des parois longitudinales 4 de manière à former deux appuis linéaires 7 s'étendant sur toute la longueur de la barrette. C'est sur ces appuis linéaires 7 que la barrette repose sur un chemin de glissement 77 représenté plus en détail sur les figures suivantes.

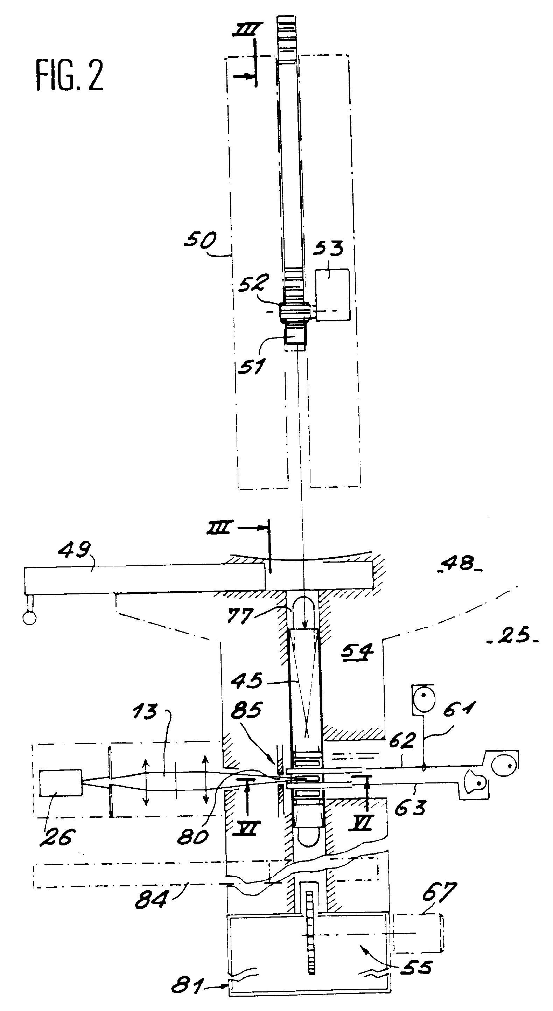

La figure 2 permet de décrire plus complètement l'appareil et le procédé pour lequel ces barrettes de cuves ont été adaptées.

On a disposé, en vue d'expériences répétitives, une série de barrettes 45 dans des rainures d'un plateau 47 disposé dans un incubateur 48. Les cuves 1 des barrettes 45 ont été, selon une application possible, remplies de sérum auquel on a ajouté un ou plusieurs réactifs propres à engendrer une fluorescence proportionnelle à la présence de la molécule à doser dans le sérum, par exemple (hormones, marqueurs hormonaux) par réaction immunologique avec au moins un réactif marqué par un cryptate d'europium.

Les barrettes selon cette invention sont particulièrement bien adaptées à des méthodes de dosages homogènes en immonufluorescence comme celle décrite dans le brevet français 85 11905.

Le principe général est le suivant :

L'échantillon qui contient une substance dont on veut connaître la présence et/ou la concentration est distribué dans une des cuves 1 selon l'invention. On va ajouter dans cette cuve au moins un réactif qui contient un récepteur de la substance à doser et un deuxième réactif qui contient un récepteur de la première réaction.

Ces réactifs peuvent être par exemple des anticorps monoclonaux. On aura préalablement fixé sur au moins l'un de ces deux réactifs un composé fluorescent, par exemple un cryptate de terre rare décrit dans la demande de brevet français 84 14799, et sur l'autre un agent chimique d'extinction qui, dans ce cas, pourra être un atome lourd.

Dans chaque cuvette de la barrette selon l'invention, on aura un mélange de l'échantillon ou du standard et au moins deux réactifs dont l'un est couplé à une molécule fluorescente et l'autre à une molécule qui permettra la modulation de cet effet de fluorescence.

La lecture se fera avec un certain retard par rapport à l'excitation de façon à éliminer les fluorescences gênantes des autres composés du sérum dont l'extinction est beaucoup plus rapide. Lors de la lecture, chaque cuvette restera arrêtée devant la tête de lecture environ une seconde et sera soumise à de très nombreux éclairs d'excitation.

Un des avantages d'une telle barrette est justement d'éviter toute interférence d'une cuve à l'autre lors de ces opérations et ceci quelles que soient les concentrations des substances à analyser, donc quelle que soit la fluorescence émise lors du passage devant la tête de lecture de ladite cuvette et quelle que soit la concentration des substances dans les cuves voisines.

Les essais décrits plus loin montrent bien que l'ensemble du dispositif permet la réalisation d'un dosage homogène en série avec une influence d'une cuve à l'autre quasiment nulle.

Il est bien entendu qu'on ne présente qu'un exemple de l'utilisation de ces barrettes et qu'on peut les utiliser pour toutes les autres techniques de dosage, immunologiques ou non.

On peut ainsi en particulier doser l'antigène carcinoembryonnaine, la prolactine, la thyroxine, l'alphafoetoprotéine, l'hormone thyréo-stimulante, la thyroxine libre et l'oestradiol.

Dans un exemple précis, on a procédé à des dosages de l'hormone thyréo-stimulante dans des échantillons de 20 à 100 microlitres qui ont été versés dans les cuves 1. On a ajouté successivement deux réactifs, l'un porteur de lanthanide chélaté (cryptate d'europium par exemple), l'autre porteur de l'agent clinique extincteur du rayonnenent, selon des quantités analogues.

Les cuves 1 sont donc remplies de 100 à 250 microlitres de mélange et séjournent dans l'incubateur.

Les barrettes 45 sont maintenues dans l'incubateur 48 à une température proche de 37°C pendant un temps convenable, d'une minute à plusieurs heures selon le cas. L'évaporation peut être assez importante et c'est pour cette raison qu'il est utile de sceller les cuves 1 par exemple au moyen d'une bande de papier adhésif 36 telle qu'on l'avait représentée figure 1.

Quand l'incubation est suffisante, on procède aux mesures en série : le déplacement d'une porte 49 ouvre la paroi de l'incubateur 48 et la barrette 45 placée devant cette porte est poussée à l'aide d'un dispositif comprenant notamment une crémaillère 51 glissant dans une coulisse en U 50 sous l'effet d'un pignon 52 mû par un moteur 53 dans un chemin de glissement 77 délimité par un capot recourbé 54 sur une table 25. La faiblesse du rayonnement fluorescent que l'on va capter nécessite en effet de travailler dans l'obscurité totale.

Quand la crémaillère 51 a complètement poussé une barrette 45 hors de l'incubateur 48, elle revient à sa position initiale ; le plateau 47 place une nouvelle barrette 45 devant la crémaillère 51 et la porte 49 se referme.

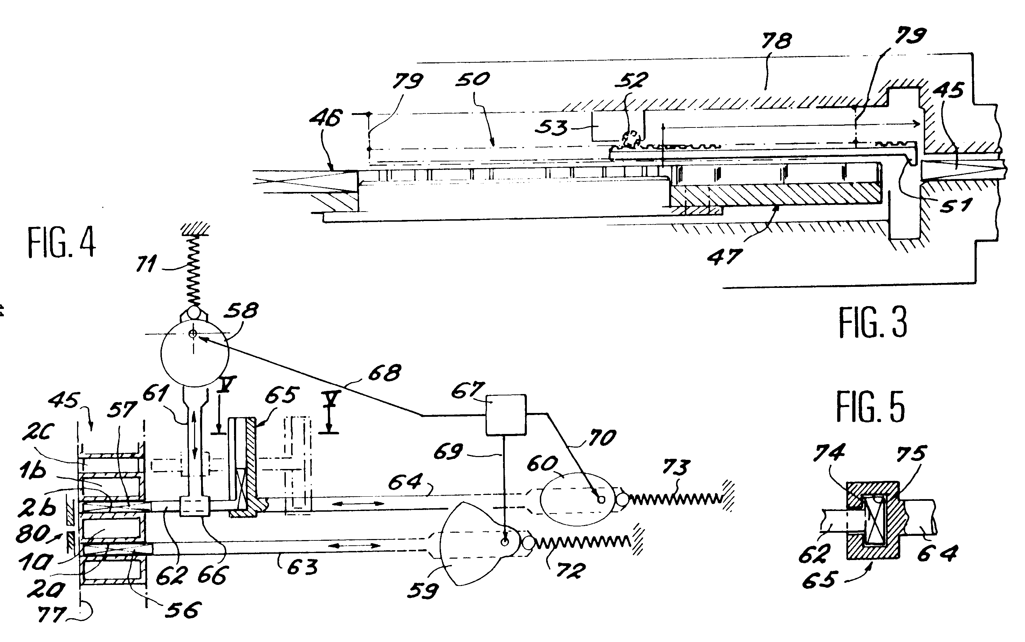

Dans la figure 2, la crémaillère 51 est rétractée dans la coulisse en U 50 ; dans la figure 3, elle est au contraire sortie.

Le plateau 47 est mobile grâce à un moteur non représenté ici. La coulisse en U 50 et le moteur 53 sont suspendus par des attaches 79 au couvercle 78 de l'incubateur 48. Les moteurs déjà mentionnés, de même que ceux dont la description va venir, ont une commande électrique reliée à un micro-ordinateur qui gère le pilotage de l'installation.

On s'intéresse maintenant à la barrette 45 qui vient d'être sortie de l'incubateur 48 au moyen de la crémaillère 51 et sur laquelle on effectue des mesures successives dont le déroulement va être décrit à l'aide tout d'abord des figures 2 et 4.

Une certaine cuve 1a se trouvant déjà en face d'un orifice 80 ménagé dans le capot 54 et par lequel passe le faisceau d'excitation 13 après passage par un collimateur rectangulaire 85, on suppose la mesure déjà effectuée sur le liquide contenu dans cette cuve 1a et il s'agit maintenant de placer la cuve voisine arrière 1b devant cet orifice 80. A cet effet, on se sert des deux écrans 56 et 57 qui étaient jusque-là enfoncés respectivement dans les deux intervalles 2a et 2b situés à l'avant et à l'arrière de la cuve 1a et voisins de celle-ci.

Un moteur électrique 67 est alors mis en marche et assure la rotation de trois cames 58, 59 et 60 au moyen de courroies 68, 69 et 70. Les cames 59 et 60 permettent de déplacer deux tiges 63 et 64 dont les extrémités en contact avec les cames sont recourbées, qui sont solidaires respectivement des écrans 56 et 57 et qui permettent d'extraire ceux-ci des intervalles 2 ou au contraire de les y enfoncer. La première tige 63 relie directement le premier écran 56 à la première came 59 ; par contre, la deuxième tige 64 se termine par une glissière 65 (figure 5) munie d'une gorge 75 dans laquelle est maintenue une butée 74 solidaire d'une extrémité d'une tringle 62 dont l'autre extrémité est solidaire du second écran 57. La troisième came 58 permet quant à elle d'agir sur une troisième tige 61 perpendiculaire aux tiges 63 et 64 et qui permet de déplacer latéralement la tringle 62 par l'intermédiaire d'un anneau 66 coulissant sur cette tringle.

Le mouvement des trois cames 58, 59 et 60 est synchrone. Il permet tout d'abord d'extraire les deux écrans 56 et 57 des intervalles 2a et 2b ; immédiatement après, la troisième came 58 commence à tirer sur la troisième tige 61 et déplace donc la tringle 62 de façon à placer le second écran 57 en face de l'intervalle 2c situé immédiatement à l'arrière de l'intervalle 2b. Cette configuration est représentée en traits mixtes sur la figure 4. La deuxième came 60 repousse alors le second écran 57 et l'enfonce dans l'intervalle 2c ; la troisième came 58 peut alors repousser la troisième tige 61 de telle façon que le second écran 57 revienne à son point de départ et entraîne la barrette 45. Finalement, sous l'action de la première came 59, le premier écran 56 revient lui aussi à son point de départ et s'enfonce dans l'intervalle 2b. Des moyens de rappel à ressort 71, 72 et 73 assurent le retour à leur position initiale des tiges 61, 63 et 64. Il est évidemment nécessaire que les cuves 1 et les intervalles 2 soient régulièrement répartis sur toutes les barrettes.

On peut facilement imaginer d'autres dispositifs utilisant les écrans 56 et 57 et qui ne soient que des variantes. En particulier l'entraînement de la barrette 45 pourrait être effectué à l'aide de deux écrans 56 et 57 solidaires de la tringle 62. Il pourrait également être effectué de façon satisfaisante à l'aide par exemple d'une chenille.

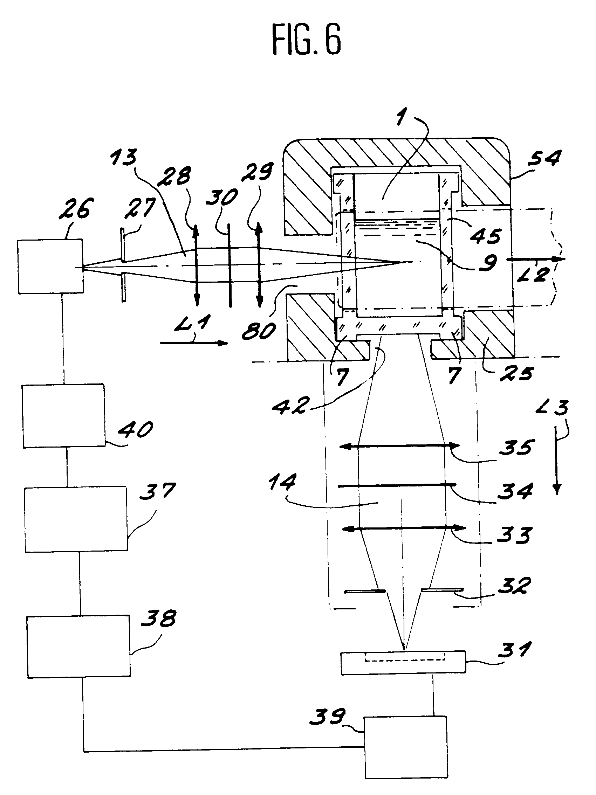

La cuve 1b environnée des intervalles 2b et 2c et voisine arrière de la cuve 1a est donc à présent placée devant l'orifice 80. La mesure sur cette cuve 1b va pouvoir être effectuée, comme on le décrit plus loin à l'aide de la figure 6, après quoi les écrans 56 et 57 sont de nouveau extraits de la barrette 45 et contribuent à la déplacer progressivement jusqu'à ce que toutes les cuves placées à l'arrière aient pu être examinées. Une deuxième porte 84 qui peut être commandée par le même mecanisme que la porte 49, et qui était jusqu'ici fermée pour assurer une obscurité totale, s'ouvre. Une molette mue par un moteur 55 et disposée à l'extrémité avant du chemin de glissement 77 (figure 2) assure alors l'évacuation de la barrette 45. Selon une construction avantageuse de l'appareil, la barrette 45 tombe finalement dans une poubelle 81 fixée de façon détachable à l'installation et ne nécessite donc plus aucune manipulation ; le scellement des cuves 1 est ici encore avantageux car il empêche les liquides de s'écouler lors de la chute, salissant ou contaminant ainsi le voisinage. Il est à noter qu'avec d'autres conceptions de barrettes déjà commercialisées et nécessitant d'être placées dans un portoir, une intervention manuelle aurait été indispensable à ce stade.

Pour la description de la mesure elle-même, on se reporte à la figure 6. La cuve 1 remplie du liquide 9 est portée devant l'orifice 80 en face d'une de ses parois longitudinales 4. Le collimateur rectangulaire 85 évite que le rayonnement incident atteigne les parois transversales 3 de la cuve et crée ainsi des fluorescences parasites excessives. Un évidement 42 ménagé au centre du chemin de glissement 77 découvre le fond 5 de la cuve 1. Sa largeur est légèrement inférieure à la largeur du fond 5 de façon à ne conserver que du rayonnement émis par le produit 9. Une lampe au xénon 26 émet un rayonnement d'excitation 13 qui passe successivement dans un diaphragme 27 et dans un filtre 30 encadré par deux lentilles 28 et 29 avant d'atteindre le liquide 9. La forme plane des parois longitudinales 4 permet l'interposition d'un diaphragme 27 avec une focalisation indépendante des défauts de la paroi, ce qui n'est pas le cas avec des parois cylindriques ; le caractère en retrait de ces parois longitudinales 4 par rapport au reste de la barrette permet d'éviter de les rayer lors de leur passage dans les rainures du plateau 47 et dans le chemin de glissement 77, ce qui nuirait grandement à la qualité des mesures.

En réponse à ce rayonnement d'excitation 13, un rayonnement fluorescent 14 d'intensité généralement faible est émis par le liquide 9. Ce rayonnement est omnidirectionnel et uniforme. On ne peut cependant le capter suivant toutes les incidences, car le rayonnement d'excitation 13, qui est d'intensité beaucoup plus forte, ne manquerait pas de perturber les mesures même s'il était filtré dans les meilleures conditions. Pour cette raison, on ne peut disposer les instruments de mesure de rayonnement fluorescent selon l'incidence L2 parallèle à l'incidence L1 par laquelle arrive le rayonnement excitateur 13 après avoir traversé le liquide 9. On mesure donc le rayonnement fluorescent 14 émis selon l'incidence L3 et qui passe par le fond 5 de la cuve 1a. C'est pourquoi le fond 5 doit avoir une bonne qualité de surface et doit être protégé en le plaçant en retrait des appuis linéaires 7 de la barrette 45.

De façon analogue au rayonnement excitateur 13, le rayonnement fluorescent 14 passe par un filtre 34 encadré par deux lentilles 33 et 35 et par un diaphragme 32. Il est ensuite recueilli par un photomultiplicateur 31 relié à un compteur de photons 39. Un générateur d'impulsions 37 complété par un temporisateur 38 autorise le comptage pendant une fenêtre temporelle définie en fonction des produits fluorescents utilisés. Le générateur d'impulsion 37 commande également l'alimentation 40 de la lampe 26 de façon à ce que la mesure soit synchrone sur l'apparition de l'éclair lumineux.

Au cours de cette mesure, les écrans 56 et 57 qui, comme on l'a vu plus haut, sont enfoncés dans les intervalles 2 environnant la cuve 1, jouent un rôle important de séparateurs optiques avec les cuves voisines. On a en effet constaté que, surtout dans les conceptions où les cuves 1 sont jointives, les cuves voisines de celles excitées émettent également un léger signal qui vient se superposer à celui que l'on cherche effectivement à mesurer et qui introduit une erreur par excès. La mise en place d'intervalles 2 permet de remédier en partie à cet inconvénient, mais des problèmes peuvent encore se poser si le produit qui engendre le rayonnement fluorescent est beaucoup plus concentré dans les cuves voisines de celles où l'on effectue la mesure. C'est ce qui justifie les écrans opaques 56 et 57 en plus de leur rôle d'avancement de la barrette 45. Les diaphragmes 27 et 32 qui amincissent les faisceaux excitateur 13 et fluorescent mesuré 14 permettent de compléter cette action en limitant l'excitation des cuves voisines et la prise en compte du rayonnement qu'elles émettent. Des essais comparatifs ont montré que l'imperméabilité entre les cuves est alors totale, alors que d'autres essais menés sans précaution avec des cuves jointives du commerce pouvaient conduire à des rayonnements parasites plus importants.

On a mené des expériences comparatives et procédé successivement au dosage du même mélange dans des cuves appartenant à des barrettes différentes et encadrées dans tous les cas par des cuves remplies d'une solution concentrée ($10^{-8}$ molaire) en $Eu^{3+}$ et qui donne une fluorescence totale de 980000 "coups" ou événements fluorescents détectés pendant l'intervalle de temps de la mesure.

Avec des cuves cylindriques jointives du commerce et sans précaution particulière, l'échantillon à doser a fourni une fluorescence de 470 coups.

Avec les cuves 1 selon l'invention, quatre expériences ont été menées.

Dans la première, où on a procédé sans diaphragme et sans écran intercalaire, donc dans des conditions analogues à l'expérience précédente, on a mesuré 350 coups.

Dans la deuxième, des diaphragmes et collimateurs ont été installés. On a enregistré 150 coups seulement.

Dans la troisième, on a supprimé les diaphragmes et collimateurs et ajouté des écrans intercalaires. On a enregistré 180 coups.

Dans la quatrième expérience, on a utilisé à la fois les diaphragmes, collimateurs et les écrans intercalaires conformément à ce qui a été décrit avec les figures 4 et 6. On a enregistré 120 coups, ce qui prouve que les erreurs par excès dues aux interférences sont encore diminuées ainsi et probablement presque nulles. De toute manière, le résultat obtenu par les cuves cylindriques jointives comporte une erreur de +290% au lieu de +190%, +25% et +50% respectivement dans les trois premières expériences avec les cuves selon l'invention, ce qui montre à la fois l'intérêt de ces cuves en elles-mêmes et l'avantage de les compléter par des dispositifs qui évitent les interférences avec leurs voisines et pour lesquels les cuves sont d'ailleurs conçues.

On constate donc que les barrettes de cuves d'après l'invention offrent un certain nombre d'avantages par rapport aux barrettes de l'art antérieur : elles peuvent être utilisées directement sans support grâce à leur solidité et à leur forme bien adaptée au glissement sur des surfaces horizontales sans possibilité de rayure au cours du déplacement ; elles ne nécessitent aucune manipulation à partir du moment ou elles ont été placées dans l'incubateur ; enfin, la présence d'intervalles que l'on peut remplir par des écrans opaques permet de s'affranchir des interférences entre cuves et ainsi d'obtenir une très bonne précision lors des mesures. Le procédé de mesure tel qu'il a été décrit n'est donc possible dans de bonnes conditions qu'avec les barrettes selon l'invention, à l'exclusion de tous les autres modèles déjà commercialisés ou décrits dans l'art antérieur.

## Revendications

1. Procédé de mesure de rayonnement lumineux issu d'un produit (9) placé dans des cuves (1) transparentes alignées régulièrement en barrettes (45), séparées par des intervalles (2) et liées par des entretoises (6, 16), consistant, après avoir rempli les cuves (1) du produit, à avancer au moyen d'un dispositif mécanique (56, 57) la barrette (45) longitudinalement sur un chemin de glissement (77) de manière à présenter successivement une face (4) de chacune des cuves (1) devant un rayonnement incident (13) et un capteur (31) mesurant un rayonnement (14) issu du produit (9) à travers une face (5) de la cuve (1), caractérisé en ce que l'on assure l'avancement de la barrette pour un dispositif mécanique qui consiste principalement en au moins un écran (57) qui vient s'enfoncer dans un intervalle (2) adjacent à la cuve où on effectue la mesure.

2. Procédé de mesure de rayonnement lumineux selon la revendication 1, caractérisé en ce que l'on enfonce des écrans opaques (56 et 57) dans deux intervalles voisins (2a, 2b) et de part et d'autre de la cuve (1a) où on effectue la mesure.

3. Procédé de mesure de rayonnement lumineux selon la revendication 1 ou 2, caractérisé en ce que le rayonnement incident (13) est excitateur et le rayonnement issu (14) est luminescent.

4. Procédé de mesure de rayonnement lumineux selon l'une quelconque des revendications 1 à 3, caractérisé en ce que les incidences du rayonnement incident (13) et du rayonnement issu (14) mesuré ne sont pas parallèles.

5. Procédé de mesure de rayonnement lumineux selon la revendication 4, dans lequel les cuves (1) sont à section rectangulaire et à fond plat, caractérisé en ce que le rayonnement incident (13) et le rayonnement issu (14) mesuré sont perpendiculaires à des faces longitudinales (4) des cuves pour l'un, au fond (5) des cuves (1) pour l'autre.

6. Procédé de mesure de rayonnement lumineux selon l'une quelconque des revendications 1 à 5, caractérisé en ce qu'au moins un des rayonnements incidents (13) et issu mesuré (14) passe par un diaphragmme (27, 32).

7. Procédé de mesure de rayonnement lumineux selon l'une quelconque des revendications 1 à 5, caractérisé en ce que les faces (4, 5) des cuves par lesquelles passent le rayonnement incident (13) et le rayonnement issu (14) mesuré présentent un renfoncement à l'intérieur de leur contour.

8. Procédé de mesure de rayonnement lumineux selon l'une quelconque des revendications 1 à 7, caractérisé en ce que l'on fait circuler la barrette (45) sur le chemin de glissement (77) en reposant sur des entretoises (6).

9. Procédé de mesure de rayonnement lumineux selon l'une quelconque des revendications 1 à 8, caractérisé en ce que l'on fait affleurer des entretoises (16) au niveau du bord des cuves (1).

10. Procédé de mesure de rayonnement lumineux selon la revendication 9, caractérisé en ce que l'on scelle les cuves (1) après leur remplissage.

11. Procédé de mesure de rayonnement lumineux selon la revendication 10, caractérisé en ce que l'on effectue une incubation après que les cuves (1) aient été scellées.

12. Procédé de mesure de rayonnement lumineux selon la revendication 3, caractérisé en ce l'on mesure le rayonnement luminescent (14) avec un retard par rapport à l'application du rayonnement incident (13).

## Patentansprüche

1. Verfahren zum Messen einer Lichtstrahlung, die von einer Produkt (9) ausgeht, das in transparenten Küvetten (1) angeordnet ist, die regelmäßig in Schienen (45) aufgereiht sind, die durch Zwischenräume (2) getrennt und über Stege (6, 16) verbunden sind, welches darin besteht, nach dem Füllen der Küvetten (1) mit dem Produkt mittels einer mechanischen Vorrichtung (59, 57) die Schiene (45) longitudinal auf einem Gleitweg (77) derart zu bewegen, daß der Reihe nach eine Fläche (4) jeder Küvette (1) vor einer einfallenden Strahlung (13) und einem Meßaufnehmer (31) präsentiert wird, der eine von dem Produkt (9) durch eine Fläche (5) der Küvette (1) ausgehende Strahlung (14) mißt, dadurch gekennzeichnet, daß man das Vorwärtsbewegen der Schiene über eine mechanische Vorrichtung sicherstellt, die hauptsächlich aus wenigstens einem Schirm (57) besteht, der sich in einem Zwischenraum (2) versenkt, der an die Küvette angrenzt, wo man die Messung durchführt.

2. Verfahren zum Messen einer Lichtstrahlung nach Anspruch 1, dadurch gekennzeichnet, daß man lichtundurchlässige Schirme (56 und 57) in zwei benachbarte Zwischenräume (2a, 2b) auf der einen und der anderen Seite der Küvette (1a), wo man die Messung durchführt, versenkt.

3. Verfahren zum Messen einer Lichtstrahlung nach Anspruch 1 oder 2, dadurch gekennzeichnet, daß die einfallende Strahlung (13) eine Anregungsstrahlung ist und daß die ausgehende Strahlung (14) eine Lumineszenzstrahlung ist.

4. Verfahren zum Messen einer Lichtstrahlung nach einem der Ansprüche 1 bis 3, dadurch gekennzeichnet, daß die Inzidenzen der einfallenden Strahlung (13) und der ausgehenden, gemessenen Strahlung (14) nicht parallel sind.

5. Verfahren zum Messen einer Lichtstrahlung nach Anspruch 4, bei dem die Küvetten (1) einen rechtwinkligen Querschnitt und einen flachen Boden besitzen, dadurch gekennzeichnet, daß die einfallende Strahlung (13) und die ausgehende, gemessene Strahlung (14) einmal senkrecht zu longitudinalen Flächen (4) der Küvetten und zum anderen senkrecht zum Boden (5) der Küvette (1) stehen.

6. Verfahren zum Messen einer Lichtstrahlung nach einem der Ansprüche 1 bis 5, dadurch gekennzeichnet, daß wenigstens eine der einfallenden Strahlung (13) und der ausgehenden, gemessenen Strahlung (14) durch ein Diaphragma (27, 32) geht.

7. Verfahren zum Messen einer Lichtstrahlung nach einem der Ansprüche 1 bis 5, dadurch gekennzeichnet, daß die Flächen (4, 5) der Küvetten, durch die die einfallende Strahlung (13) und die ausgehende, gemessene Strahlung (14) gehen, eine Verstärkung innerhalb ihres Umfanges aufweisen.

8. Verfahren zum Messen einer Lichtstrahlung nach einem der Ansprüche 1 bis 7, dadurch gekennzeichnet, daß man die Schiene (45) auf dem Gleitweg (77) durch Aufstützen auf den Stegen (9) umlaufen läßt.

9. Verfahren zum Messen einer Lichtstrahlung nach einem der Ansprüche 1 bis 8, dadurch gekennzeichnet, daß man die Stege (19) auf die Höhe des Randes der Küvetten (1) kommen läßt.

10. Verfahren zum Messen einer Lichtstrahlung nach einem der Ansprüche 1 bis 9, dadurch gekennzeichnet, daß man die Küvetten (1) nach ihrem Auffüllen versiegelt.

11. Verfahren zum Messen einer Lichtstrahlung nach Anspruch 10, dadurch gekennzeichnet, daß man eine Inkubation nach dem Versiegeln der Küvetten (1) durchführt.

12. Verfahren zum Messen einer Lichtstrahlung nach Anspruch 3, dadurch gekennzeichnet, daß man die Lumineszenzstrahlung (14) mit einer Verzögerung bezüglich dem Anlegen der einfallenden Strahlung (13) mißt.

**Claims**

1. Method for measuring luminous radiation issuing from a product (9) placed in transparent cells (1) uniformly aligned in arrays (45), separated by gaps (2) and joined by braces (6, 16), consisting, after having filled the cells (1) with the product, in advancing the array (45) longitudinally over a slideway (77) by means of a mechanical device (56, 57) in such a manner as to present successively a face (4) of each of the cells (1) in front of an incident radiation (13) and a sensor (31) measuring radiation (14) issuing from the product (9) through a face (5) of the cell (1), characterised in that the advance of the array is ensured by a mechanical device consisting principally of at least one screen (57) which is inserted into a gap (2) adjacent to the cell where the measurement is carried out.

2. Method for measuring luminous radiation according to Claim 1, characterised in that opaque screens (56 and 57) are inserted into two neighbouring gaps (2a, 2b) on each side of the cell (1a) where the measurement is carried out.

3. Method for measuring luminous radiation according to Claims 1 or 2, characterised in that the incident radiation (13) is exciting and the issuant radiation (14) is luminescent.

4. Method for measuring luminous radiation according to any one of Claims 1 to 3, characterised in that the lines of incidence of the incident radiation (13) and of the measured issuant radiation (14) are not parallel.

5. Method for measuring luminous radiation according to Claim 4, in which the cells (1) have a rectangular cross-section and a flat bottom, characterised in that the incident radiation (13) and the measured issuant radiation (14) are perpendicular to longitudinal faces (4) of the cells on the one hand and to the bottom (5) of the cells (1) on the other.

6. Method for measuring luminous radiation according to any one of Claims 1 to 5, characterised in that at least one of the incident (13) and measured issuant (14) radiations passes via a diaphragm (27, 32).

7. Method for measuring luminous radiation according to any one of Claims 1 to 5, characterised in that the faces (4, 5) of the cells by which the incident (13) and the measured issuant (14) radiation pass have a reinforcement within their profile.

8. Method for measuring luminous radiation according to any one of Claims 1 to 7, characterised in that the array (45) is caused to travel over the slideway (77) while resting on braces (6).

9. Method for measuring luminous radiation according to any one of Claims 1 to 8, characterised in that braces (16) are flush with the level of the edge of the cells (1).

10. Method for measuring luminous radiation according to Claim 9, characterised in that the cells are sealed after being filled.

11. Method for measuring luminous radiation according to Claim 10, characterised in that an incubation is carried out after the cells (1) have been sealed.

12. Method for measuring luminous radiation according to Claim 3, characterised in that the luminous radiation (14) is measured after a delay in relation to the application of the incident radiation (13).

FIG. 1

FIG. 2

FIG. 3

FIG. 4

FIG. 5

EP 0 293 440 B1

# FIG. 6